# EUROPEAN PATENT APPLICATION

(11) **EP 4 756 983 A1**
(43) Date of publication of application: **10.06.2026**
(21) Application number: 24848083.2
(22) Date of filing: 23.07.2024
(51) Int. Cl.: H01M 10/44, H01M 50/609, H01M 10/54, H01M 10/0525

(54) **METHOD FOR REPAIRING CAPACITY OF WASTE LITHIUM-ION BATTERY**

(30) Priority: 29.07.2023 CN 202310942027
(71) Applicant: Aurora Power&Energy Holdings Pte. Ltd., Singapore 189652 (SG)
(72) Inventor: CHEN, Feng, Xi'an, Shaanxi 710075 (CN); LI, Chao, Xi'an, Shaanxi 710075 (CN); ZHENG, Gaofeng, Xi'an, Shaanxi 710075 (CN)
(74) Representative: Finetti, Claudia
(86) International application number: PCT/CN2024/106871
(87) International publication number: WO 2025/026125

(57) **Abstract**

Provided is a method for repairing the capacity of a waste lithium-ion battery, which belongs to the field of batteries, so as to improve the charge and discharge cycle performance of the lithium-ion battery, and reduce the use costs of the battery while reducing the pressure of the waste lithium-ion battery on environments. The method includes: first, deeply over-discharging a waste lithium-ion battery; second, discharging a free electrolyte solution and a gas in an inner cavity of the waste lithium-ion battery together with impurities in the inner cavity of the waste lithium-ion battery; then injecting a first electrolyte solution into the inner cavity of the treated waste lithium-ion battery, and allowing the battery to stand for a set time; and testing the capacity of the battery, completing the repair of the capacity of the waste lithium-ion battery if a set target value is reached, otherwise, continuing execution of the operations above. The present disclosure is simple in operation and significant in capacity recovery effect, and greatly prolongs the cycle life of a lithium-ion battery.

## Description

### Technical Field

The present disclosure belongs to the field of batteries, and in particular to a method for repairing the capacity of a waste lithium-ion battery.

### Background

Lithium-ion batteries are secondary batteries, which operate mainly by depending on the movement of lithium ions between a cathode and an anode. During charge and discharge processes, Li⁺ is embedded and de-embedded between two electrodes. During charging, the Li⁺ is de-embedded from the cathode and is embedded into the anode via an electrolyte, and the anode is in a lithium-enriched state; and during discharging, the process is opposite.

With the popularization and application of the lithium-ion batteries, waste lithium-ion batteries are about to pose environmental problems. If the waste lithium-ion batteries can be repaired to increase their capacities and recycled, environmental burdens may be reduced, and costs may also be saved.

### Summary

The present disclosure is intended to provide a method for repairing the capacity of a waste lithium-ion battery, so as to improve the charge and discharge cycle performance of the lithium-ion battery, and reduce the use costs of the battery while reducing the pressure of the waste lithium ion-battery on environments.

The technical solution of the present disclosure is to provide a method for repairing the capacity of a waste lithium-ion battery. In particular, the method includes the following steps:
At S1, a waste lithium-ion battery is deeply over-discharged;
At S2, a free electrolyte solution and a gas in an inner cavity of the waste lithium-ion battery are discharged together with impurities in the inner cavity of the waste lithium-ion battery. It is to be noted that, if the inner cavity of the waste lithium-ion battery treated in S1 has the free electrolyte solution, the free electrolyte solution and the gas in the inner cavity of the waste lithium-ion battery are discharged together with the impurities in the inner cavity of the waste lithium-ion battery, otherwise, a second electrolyte solution is injected into the inner cavity of the waste lithium-ion battery treated in S1, the battery is allowed to stand for a set time, and then the free electrolyte solution and the gas in the inner cavity of the waste lithium-ion battery are discharged together with the impurities in the inner cavity of the waste lithium-ion battery;
At S3, a first electrolyte solution is injected into the inner cavity of the waste lithium-ion battery treated in S2, and the battery is allowed to stand for a set time;
At S4, the capacity of the battery is tested, and the repair of the capacity of the waste lithium-ion battery is completed if a set target value is reached, otherwise, S1 is returned to.

Further, in S2, before discharging the free electrolyte solution and the gas in the inner cavity of the waste lithium-ion battery, the method further includes a step of shaking the waste lithium-ion battery.

Further, a concentration of lithium ions in the second electrolyte solution is 1.2 mol/L.

Further, in S1, a constant-resistance discharge method is used to deeply over-discharge the waste lithium-ion battery to a voltage to be 0.01 V.

Further, the first electrolyte solution is an electrolyte solution that is obtained by purifying, using a purification material, the free electrolyte solution discharged in S2.

Further, the purification material is at least one of an active molecular sieve, an activated carbon adsorbent, a silica gel adsorbent, an alumina adsorbent, a copper catalyst adsorbent, or polyimide.

Further, before S1, the method further includes: whether the inner cavity of the waste lithium-ion battery has the free electrolyte solution is determined, and if so, a step of discharging the free electrolyte solution and injecting a fourth electrolyte solution is performed, where the fourth electrolyte solution is a pure-solvent electrolyte solution.

Further, a step of forming the lithium-ion battery treated in S3 is also included between S3 and S4.

Further, the first electrolyte solution includes an SEI film forming additive.

Further, after forming the lithium-ion battery treated in S3 and before executing S4, the method further includes the following step:
The free electrolyte solution in the inner cavity of the formed lithium-ion battery is discharged, then a third electrolyte solution is injected into the inner cavity of the lithium-ion battery, and the battery is allowed to stand for a set time.

The present disclosure further provides a method for repairing the capacity of a waste lithium-ion battery. In particular, the method includes the following steps:
At S1, a waste lithium-ion battery is deeply over-discharged;
At S2, a gas in an inner cavity of the waste lithium-ion battery is discharged;
At S3, a first electrolyte solution is injected into the inner cavity of the waste lithium-ion battery treated in S2, and the battery is allowed to stand for a set time, where the first electrolyte solution has an SEI film repairing additive;
At S4, the lithium-ion battery treated in S3 is formed;
At S5, the capacity of the battery is tested, and the repair of the capacity of the waste lithium-ion battery is completed if a set target value is reached, otherwise, S1 is returned to.

Further, in S1, a constant-current or constant-resistance discharge method is used to deeply over-discharge the waste lithium-ion battery to a voltage to be 0.01 V.

Beneficial effects of the present disclosure are as follows.
1. The present disclosure over-discharges a battery with capacity fading and decomposes an SEI film, then, discharges a free electrolyte solution and a gas in an inner cavity of the over-discharged battery together with impurities in the inner cavity of the battery, and finally, adds a first electrolyte solution to the inner cavity of the battery, so as to complete the repairing. The present disclosure is simple in operation and significant in capacity recovery effect, and greatly prolongs the cycle life of a lithium-ion battery.
2. The present disclosure causes the impurities to suspend in the free electrolyte solution as many as possible by means of shaking, so as to be discharged, thereby avoiding an impact of the impurities on battery performance.
3. The present disclosure carries the impurities out of the inner cavity of the battery by using a second electrolyte solution with a higher lithium-ion concentration, and simultaneously, the final lithium-ion concentration in the electrolyte solution in the inner cavity of the battery may be balanced at about 1 mol/L, thereby further improving the battery performance.

### Brief Description of the Drawings

Fig. 1 is a curve diagram of a discharge capacity retention rate of each sample according to Embodiment 1 and Embodiment 2.
Fig. 2 is a curve diagram of a discharge capacity retention rate of each sample according to Embodiment 4.
Fig. 3 is a curve diagram of a discharge capacity retention rate of each sample according to Embodiment 5.
Fig. 4 is a curve diagram of a discharge capacity retention rate of each sample according to Embodiment 6.
Fig. 5 is a curve diagram of a discharge capacity retention rate of each sample according to Embodiment 7.
Fig. 6 is a schematic structural diagram of a high-capacity lithium-ion battery according to Embodiment 8.
Fig. 7 is a curve diagram of a discharge capacity retention rate of each sample according to Embodiment 12.

In the drawings: 1. Single battery; 2. Electrolyte solution sharing chamber; 3. Buffer tank; 4. First pipe section; 5. Second pipe section; and 6. Third pipe section.

### Detailed Description of the Embodiments

In order to make the foregoing objectives, features, and advantages of the present disclosure clearer and easier to understand, specific implementations of the present disclosure are described in detail below with reference to the drawings of the specification. It is apparent that the described embodiments are part of the embodiments of the present disclosure, not all the embodiments. All other embodiments obtained by those of ordinary skill in the art on the basis of the embodiments in the present disclosure without creative work shall fall within the scope of protection of the present disclosure.

For ease of full understanding of the present disclosure, many specific details are set forth in the following description. However, the present disclosure may be implemented in other ways different from those described herein, and those skilled in the art may make similar generalizations without violating the connotations of the present disclosure, and thus the present disclosure is not limited by the specific embodiments disclosed below.

In the description of the present disclosure, it is to be noted that, terms such as "top", "bottom", and the like are orientation or position relationships shown in the drawings, are adopted not to indicate or imply that indicated apparatuses or components must be in specific orientations or structured and operated in specific orientations but only to conveniently describe the present disclosure and simplify descriptions, and thus should not be construed as limits to the present disclosure. In addition, the terms "first", "second", etc. are for descriptive purposes only, and should not be construed as indicating or implying relative importance.

The capacity fading of a lithium-ion battery is largely attributed to the thickening of an SEI film, which increases the internal resistance of the battery. Therefore, the capacity of the battery may be recovered by reducing the thickness of the SEI film and reducing the internal resistance of the battery. The present disclosure over-discharges the battery with capacity fading and decomposes the SEI film, so as to reduce the thickness of the SEI film; then, the free electrolyte solution and the gas in an inner cavity of the over-discharged battery are discharged together with impurities in the inner cavity of the battery, the impurities include original impurities in the inner cavity of the battery and impurities generated after over-discharging, and if there is less free electrolyte solution in the inner cavity of the over-discharged battery, a second electrolyte solution may be injected into the inner cavity of the battery, causing solid impurities to suspend in the second electrolyte solution to be discharged; and finally, a first electrolyte solution is added to the inner cavity of the battery, so as to complete the repairing.

In order to discharge the impurities in the inner cavity of the over-discharged battery as many as possible, the impurities are suspended in the free electrolyte solution as many as possible and discharged by means of shaking.

During actual operations, it is found that if, before over-discharging, partial additive in the electrolyte solution is decomposed during over-discharging, causing a repair effect of over-discharging to be greatly reduced. In the present disclosure, by discharging the original free electrolyte solution in the battery, a pure-solvent electrolyte solution (electrolyte solution without additive) is replaced, such that the interference of the additive does not occur during over-discharging, and a good repair effect may be obtained.

During the process of reducing the thickness of the SEI film by means of over-discharging, the SEI film may be broken. In order to overcome the problem, in the present disclosure, it is considered that, after the above repair process, small-current formation may be performed to appropriately repair the broken SEI film, such that the capacity of the battery is increased while the cycle life of the battery is prolonged.

It is to be noted that,
since the repair process of the present disclosure involves a plurality of electrolyte solution injection and discharging processes, it is more suitable for a lithium-ion battery provided with an electrolyte solution injection port and an electrolyte solution discharging port, which may be a lithium-ion single battery, and is also suitable for a high-capacity battery with a shared chamber, where ports of the shared chamber may serve as the electrolyte solution injection port and the electrolyte solution discharging port.

Such high-capacity battery includes a battery pack main body and at least one shared chamber.

The battery pack main body includes a plurality of single batteries connected in parallel. The single battery here is a square shell battery, and the square shell battery includes an upper cover plate, a lower cover plate, a cylinder body, a battery cell assembly, and an electrolyte solution. The battery cell assembly here may be referred to as an electrode assembly, which is arranged by a cathode, a diaphragm, and an anode and is assembled by using a stacking or winding process. The battery cell assembly here may also be a commercially-available square shell battery. The upper cover plate, the cylinder body, and the lower cover plate constitute a square shell battery housing. The battery cell assembly and the electrolyte solution are located in the single battery housing.

The shared chamber is fixed on the battery pack main body, and an inner cavity of the shared chamber communicates with an inner cavity of each single battery.

When being fixed at the bottom of the battery pack main body, the shared chamber may serve as an electrolyte solution sharing chamber, and the electrolyte solution in the inner cavity of each single battery communicates with each other via the electrolyte solution sharing chamber, causing the electrolyte solutions of all the single batteries to be in the same system, such that a difference between the electrolyte solutions of the single batteries is reduced, and the consistency between the single batteries is improved to a certain extent, thereby prolonging the cycle life of the high-capacity battery to a certain extent.

When being fixed at the top of the battery pack main body, the shared chamber may serve as a gas communication chamber, and gases in the inner cavities of the single batteries communicate with each other via the gas communication chamber, causing the gas in the inner cavity of the entire high-capacity battery to be balanced, thereby prolonging the cycle life of the high-capacity battery to a certain extent.

When being fixed on a side wall of the battery pack main body, the shared chamber may simultaneously serve as the electrolyte solution sharing chamber and the gas communication chamber, the gases and electrolyte solutions in the single batteries may enter the shared chamber at the same time, and at this case, the gases are distributed at the upper portion of the shared chamber, and the electrolyte solutions are distributed at the lower portion of the shared chamber. Gas-liquid sharing may be realized by one shared chamber.

The present disclosure is further described below with reference to specific embodiments.

### Embodiment 1

In this embodiment, a waste lithium-ion single battery was used as a repair object.

A plurality of waste 30 Ah square shell lithium iron phosphate batteries produced by the same manufacturer and at the same batch were taken, initial capacities of the batteries were tested, and 10 samples were screened as Sample 1 to Sample 10 of this embodiment; Sample 1 to Sample 10 were deeply discharged, and then second electrolyte solutions with the same lithium-ion concentration and same amount were injected into inner cavities of the samples; after standing for 24 to 72 hours, free electrolyte solutions and gases in the inner cavities of the waste lithium-ion batteries were discharged; first electrolyte solutions were injected into the inner cavities of the samples, and after standing for 24 to 72 hours, the capacities of the batteries were tested; and if a set target value was reached, the repair of the capacities of the waste lithium-ion batteries was completed, otherwise, the above operations were repeated until the capacity was recovered to the set target value.

It was to be noted that,
1. This embodiment selected the waste lithium-ion single battery as the sample. After over-discharging, there was hardly free electrolyte solution in the inner cavity. In order to discharge impurities in the inner cavity of the over-discharged battery more easily, after over-discharging, the second electrolyte solution was injected into the inner cavity of the battery, and the impurities in the inner cavity of the battery were discharged with the free second electrolyte solution, thereby avoiding the impact of the impurities on the charge and discharge cycle performance of the battery. In some other embodiments, if the inner cavity of the battery had the free electrolyte solution after over-discharging and the impurities could be well discharged by discharging the second electrolyte solution, the step of injecting the second electrolyte solution into the inner cavity of the battery after over-discharging might be omitted. Furthermore, in some other embodiments, the impurities might be fully suspended in the free electrolyte solution by means of shaking the battery, so as to be discharged.
2. A concentration of lithium ions in the second electrolyte solution in this embodiment was 1.2 mol/L, and an injection amount was 20 mL.
3. The purpose of selecting the second electrolyte solution with the lithium-ion concentration greater than 1.0 mol/L included the following two points.
   a. After the battery was used for a period of time, the lithium-ion concentration in the electrolyte solution showed a downward trend. In this embodiment, by injecting the second electrolyte solution into the inner cavity of the battery, the lithium-ion concentration in the electrolyte solution in the inner cavity of the over-discharged battery might be balanced to cause the concentration of the electrolyte solution in a free state or attached to a diaphragm or positive and anodes to be close to 1.0 mol/L.
   b. After standing for a period of time, the free electrolyte solution was discharged, the impurities in the inner cavity of the battery might be carried out, and the impurities included original impurities in the inner cavity of the battery and impurities generated after over-discharging.
   It was to be noted herein that, the discharged electrolyte solution was the free electrolyte solution, the concentration of the electrolyte solution attached to the diaphragm or positive and anodes was still close to 1.0 mol/L, ensuring that after the first electrolyte solution with the lithium-ion concentration being 1.0 mol/L was injected, the lithium-ion concentration of the electrolyte solution in the inner cavity of the battery was still maintained at about 1.0 mol/L.
4. The first electrolyte solution in this embodiment might be an electrolyte solution that was obtained by purifying, using a purification material, the discharged free electrolyte solution. The purification material might be at least one of an active molecular sieve, an activated carbon adsorbent, a silica gel adsorbent, an alumina adsorbent, a copper catalyst adsorbent, or polyimide. Water and other impurities in the electrolyte solution might be removed.

Components in the above first electrolyte solution and second electrolyte solution included one or more of ethylene carbonate, propylene carbonate, vinylene carbonate, ethylene carbonate, propylene carbonate, butylene carbonate, fluoroethylene carbonate, dimethyl carbonate, diethyl carbonate, dipropyl carbonate, ethyl methyl carbonate, dipropyl carbonate, methyl propyl carbonate, ethyl propyl carbonate, methyl propargyl carbonate, 1,4-butyrolactone, methyl propionate, methyl butyrate, ethyl acetate, ethyl propionate, propyl propionate, and ethyl butyrate, as well as a lithium salt.

The lithium salt was one or more of LiPF₆, LiClO₄, LiBF₄, LiBOB, LiODFB, LiTDI, LiTFSI, and LiFSI.

Details might be executed according to the following steps:
(1) Screening: the capacities of the plurality of waste 30 Ah square shell lithium iron phosphate batteries produced by the same manufacturer and at the same batch were tested on a charge and discharge tester, and 10 lithium-ion batteries with the capacity greater than 60% were screened as Sample 1 to Sample 10 of this embodiment.
   A specific method for testing the capacity included: at 25 °C±5 °C, a battery was charged to a voltage of 3.65 V at a constant current (0.75 C) and charged to a cut-off current of 1/20 C at a constant voltage by using a 5 V-20 A charge and discharge tester, allowed to stand for 30 min, and then discharged to a voltage of 2.5 V at a constant current, completing one cycle, the cycle was repeated for 4 times, an average value of the tested battery capacity was used as a capacity baseline and calculated based on 100% mass.
(2) Over-discharging: Sample 1 to Sample 10 were deeply over-discharged on the charge and discharge tester to a voltage to equal to 0.01 V; and this embodiment used a constant-resistance over-discharge method, resistance was determined according to the internal resistance of the battery cell, and if the internal resistance was smaller, a constant-resistance value was smaller, and vice versa.
(3) Electrolyte solution injection: in a glove box, a battery electrolyte solution injection port was opened, 20 mL of the second electrolyte solution was injected by using a syringe, and the battery was sealed after electrolyte solution injection and allowed to stand for 24-72 h.
   Components in the second electrolyte solution in this embodiment included: 30% of ethylene carbonate, 15% of propylene carbonate, 1% of vinylene carbonate, 20% of dimethyl carbonate, 20% of ethyl methyl carbonate, 14% of diethyl carbonate, and 1.2 mol/L of lithium hexafluorophosphate.
(4) Impurity removal: free electrolyte solutions and gases in the inner cavities of the samples were discharged together with the impurities in the inner cavity of the waste lithium-ion battery.
(5) Electrolyte solution injection: the first electrolyte solution was injected into the inner cavity of each sample, and the sample was allowed to stand for 24-72 h.

Components in the first electrolyte solution in this embodiment included: 30% of ethylene carbonate, 15% of propylene carbonate, 1% of vinylene carbonate, 20% of dimethyl carbonate, 20% of ethyl methyl carbonate, 14% of diethyl carbonate, and 1.0 mol/L of lithium hexafluorophosphate.
(6) Charge and discharge test.
(6.1) The repaired capacity of the battery was directly tested at 0.5-1 C on the charge and discharge tester.
(6.2) At 25 °C±5 °C, a battery was charged to a voltage of 3.65 V at a constant current (0.75 C) and charged to a current of 1/20 C at a constant voltage by using the 5 V-20 A charge and discharge tester, allowed to stand for 30 min, and then discharged to a cut-off voltage of 2.5 V at a constant current, completing one cycle; the capacities after the battery was discharged for 100 cycles and 200 cycles were tested; and in combination with the initial cycle capacity of the battery, charge and discharge capacity retention rates for 100 cycles and 200 cycles were calculated.

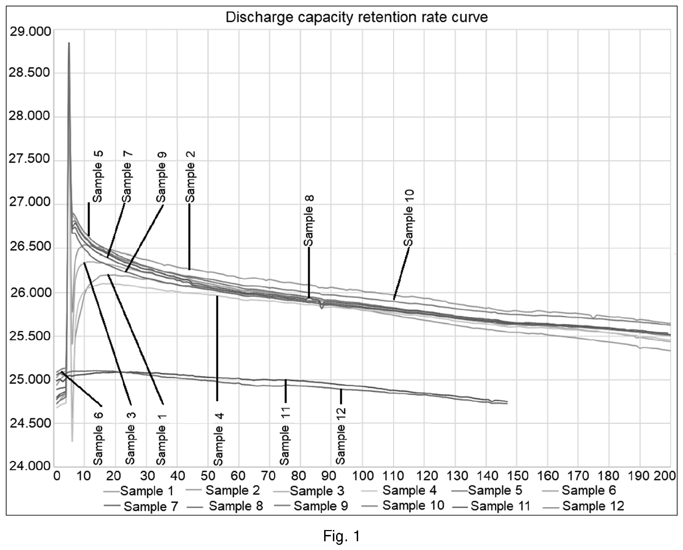

Detailed test data was shown in Table 1 and Fig. 1.

**Table 1**

| | Nominal capacity/Ah | Initial capacity/Ah | Initial capacity retention rate% | Capacity/ Ah after first repair | Capacity retention rate% after first repair | Charge and discharge capacity/ Ah after 100 cycles | Charge and discharge capacity retention rate% after 100 cycles | Charge and discharge capacity/ Ah after 200 cycles | Charge and discharge capacity retention rate% after 200 cycles |
|---|---|---|---|---|---|---|---|---|---|
| Sample 1 | 30 | 24.937 | 83.12 | 26.196 | 87.32 | 25.793 | 85.98 | 25.328 | 84.43 |
| Sample 2 | 30 | 24.770 | 82.57 | 26.533 | 88.44 | 26.011 | 86.70 | 25.643 | 85.48 |
| Sample 3 | 30 | 24.725 | 82.42 | 26.345 | 87.82 | 25.868 | 86.23 | 25.434 | 84.78 |
| Sample 4 | 30 | 24.679 | 82.26 | 26.096 | 86.99 | 25.799 | 86.00 | 25.456 | 84.85 |
| Sample 5 | 30 | 25.083 | 83.61 | 26.912 | 89.71 | 25.868 | 86.23 | 25.503 | 85.01 |
| Sample 6 | 30 | 25.023 | 83.41 | 26.897 | 89.66 | 25.854 | 86.18 | 25.505 | 85.02 |
| Sample 7 | 30 | 24.887 | 82.96 | 26.734 | 89.11 | 25.832 | 86.11 | 25.511 | 85.04 |
| Sample 8 | 30 | 24.798 | 82.66 | 26.783 | 89.28 | 25.852 | 86.17 | 25.534 | 85.11 |
| Sample 9 | 30 | 24.778 | 82.59 | 26.670 | 88.90 | 25.820 | 86.07 | 25.511 | 85.04 |
| Sample 10 | 30 | 24.722 | 82.41 | 26.806 | 89.35 | 25.932 | 86.44 | 25.621 | 85.40 |

From Table 1 and Fig. 1, it might be seen that, after first repair was completed, the capacity of the lithium-ion single battery in this embodiment was greater than the initial capacity, considering that the capacity was recovered to the set target value.

Then, after 100 and 200 charge and discharge cycles, the capacity and capacity retention rate were still higher than the initial capacity and the initial capacity retention rate.

After the repaired lithium-ion single battery underwent the charge and discharge cycles for a period of time, capacity fading occurred again, and repair might also be performed for a plurality of times by using the method of this embodiment.

### Embodiment 2

This embodiment was used as a comparative example of Embodiment 1, and used a waste lithium-ion single battery as a repair object. A difference between this embodiment and Embodiment 1 lied in that step (2) in Embodiment 1 was not executed in this embodiment, and the waste lithium-ion single battery was repaired by only using step (3), step (4), and step (5).

Details might be executed according to the following steps.
(1) Screening: the capacities of the plurality of waste 30 Ah square shell lithium iron phosphate batteries produced by the same manufacturer and at the same batch were tested on a charge and discharge tester, and 2 lithium-ion batteries with the capacity greater than 60% were screened as Sample 11 and Sample 12 of this embodiment. The specific method for testing the capacity was the same as that in Embodiment 1, and thus was not described herein again.
(2) Electrolyte solution injection: in a glove box, a battery electrolyte solution injection port was opened, 20 mL of the second electrolyte solution was injected by using a syringe, and the battery was sealed after electrolyte solution injection and allowed to stand for 24-72 h.
(3) Impurity removal: gases and free electrolyte solutions in the inner cavities of the samples were discharged together with the impurities in the inner cavity of the waste lithium-ion battery.
(4) The first electrolyte solution was injected into the inner cavity of each sample, and the sample was allowed to stand for 24-72 h.
   The first electrolyte solution and the second electrolyte solution were the same as those in Embodiment 1.
(5) A charge and discharge test was performed by using the method of step (6) in Embodiment 1.

Detailed test data was shown in Table 2 and Fig. 1.

**Table 2**

| | Nominal capacity/ Ah | Initial capacity/ Ah | Initial capacity retention rate% | Repaired capacity/Ah | Repaired capacity retention rate% | Charge and discharge capacity/Ah after 147 cycles | Charge and discharge capacity retention rate% after 147 cycles |
|---|---|---|---|---|---|---|---|
| Sample 11 | 30 | 24.983 | 83.28 | 25.082 | 83.61 | 24.747 | 82.49 |
| Sample 12 | 30 | 25.053 | 83.51 | 25.101 | 83.67 | 24.724 | 82.41 |

From Table 2 and Fig. 1, it might be seen that, by means of replacing the electrolyte solution, the capacity might also be increased. However, the increase in capacity was relatively small compared to Embodiment 1.

### Embodiment 3

A difference between this embodiment and Embodiment 1 lied in that, in this embodiment, the repair process in Embodiment 1 was repeatedly executed for twice. The detailed execution process included the following.

Two new 24 Ah square shell lithium iron phosphate batteries were taken, and were used as Sample 13 and Sample 14 after 200 charge and discharge cycles.

Sample 13 and Sample 14 were deeply discharged, and then second electrolyte solutions with the same lithium-ion concentration and same amount were injected into inner cavities of the samples; after standing for 24 to 72 hours, free electrolyte solutions and gases in the inner cavities of the waste lithium-ion batteries were discharged together with the impurities in the inner cavities of the waste lithium-ion batteries; first electrolyte solutions were injected into the inner cavities of the samples; and after standing for 24 to 72 hours, the capacities of the batteries were tested. Then, after 200 charge and discharge cycles, the above operations were repeated once, and detailed test data was shown in Table 3.

**Table 3**

| | Initial capacity/ Ah | Capacity/Ah after 200 cycles | Capacity retention rate% | Capacity/ Ah after first repair | Capacity retention rate% after first repair | Capacity/ Ah for 200 cycles after first repair | Capacity retention rate% for 200 cycles after first repair | Capacity/ Ah after second repair | Capacity retention rate% after second repair |
|---|---|---|---|---|---|---|---|---|---|
| Sample 13 | 23.089 | 22.794 | 98.69 | 23.552 | 102.01 | 22.652 | 98.11 | 23.127 | 100.16 |
| Sample 14 | 23.036 | 22.678 | 98.45 | 23.399 | 101.58 | 22.529 | 97.80 | 23.078 | 100.18 |

From Table 3, it might be seen that, after the repaired lithium-ion single battery underwent the charge and discharge cycles for a period of time, the capacity faded to a point where it required repair again, and repair might also be performed for a plurality of times by using the method of the present disclosure.

### Embodiment 4

In this embodiment, a waste lithium-ion single battery was used as a repair object.

A difference between this embodiment and Embodiment 1 lied in that, in this embodiment, for a plurality of samples, second electrolyte solutions with different lithium-ion concentrations were injected in step (3).

In this embodiment, a plurality of waste 30 Ah square shell lithium iron phosphate batteries produced by the same manufacturer and at the same batch were taken, initial capacities of the batteries were tested, and 10 samples were screened as Sample 15 to Sample 24 of this embodiment; Sample 15 to Sample 24 were deeply discharged, and then second electrolyte solutions with different concentrations were injected into inner cavities of the samples; after standing for a set time, free electrolyte solutions and gases in the inner cavities of the waste lithium-ion batteries were discharged together with the impurities in the inner cavities of the waste lithium-ion batteries; first electrolyte solutions were injected into the inner cavities of the samples, and after standing for 24 to 72 hours, the capacities of the batteries were tested; and if a set target value was reached, the repair of the capacities of the waste lithium-ion batteries was completed, otherwise, the above operations were repeated until the capacity was recovered to the set target value.

Specific steps were the same as those in Embodiment 1, and thus were not described herein again.

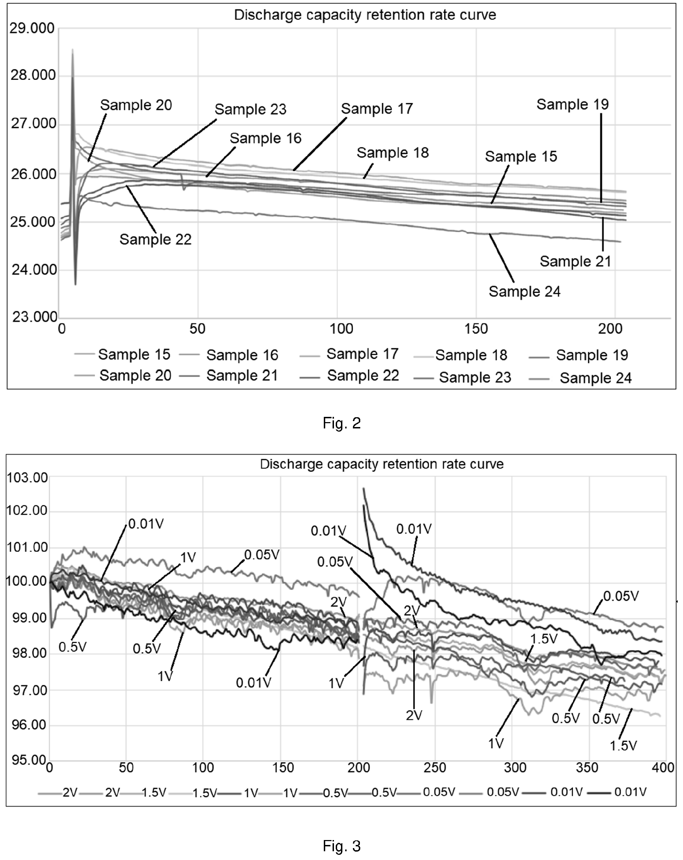

Detailed test data was shown in Table 4 and Fig. 2.

**Table 4**

| | Lithium-ion concentration (mol/L) in second electrolyte solution | Initial capacity /Ah | Initial capacity retention rate% | Capacity/Ah after first repair | Capacity retention rate% after first repair | Charge and discharge capacity/Ah after 200 cycles | Charge and discharge capacity retention rate% after 200 cycles |
|---|---|---|---|---|---|---|---|
| Sample 15 | 1.0 | 24.773 | 82.58 | 25.934 | 86.45 | 25.246 | 84.15 |
| Sample 16 | 1.0 | 24.733 | 82.44 | 25.982 | 86.61 | 25.449 | 84.83 |
| Sample 17 | 1.2 | 24.874 | 82.91 | 26.515 | 88.38 | 25.637 | 85.46 |
| Sample 18 | 1.2 | 24.807 | 82.69 | 26.641 | 88.80 | 25.617 | 85.39 |
| Sample 19 | 1.4 | 24.708 | 82.36 | 26.429 | 88.10 | 25.387 | 84.62 |
| Sample 20 | 1.4 | 24.740 | 82.47 | 26.303 | 87.68 | 25.184 | 83.95 |
| Sample 21 | 1.6 | 25.396 | 84.65 | 25.541 | 85.14 | 25.041 | 83.47 |
| Sample 22 | 1.6 | 25.139 | 83.80 | 25.416 | 84.72 | 25.135 | 83.78 |
| Sample 23 | 1.8 | 25.056 | 83.52 | 25.916 | 86.39 | 25.324 | 84.41 |
| Sample 24 | 1.8 | 24.926 | 83.09 | 25.485 | 84.95 | 24.585 | 81.95 |

From Table 4 and Fig. 2, it might be seen that, when the concentration of the lithium ions in the second electrolyte solution was 1.2 mol/L, the repair effect was optimal.

### Embodiment 5

In this embodiment, a waste lithium-ion single battery was used as a repair object.

A difference between this embodiment and Embodiment 1 lied in that, in this embodiment, for a plurality of samples, different over-discharging voltages were used in step (2).

A plurality of new 24 Ah square shell lithium iron phosphate batteries were taken in this embodiment, and were used as Sample 25 to Sample 36 after 200 charge and discharge cycles.

Sample 25 to Sample 34 were deeply discharged (every two samples were over-discharged to the same voltage), then the capacity was tested, and the charge and discharge capacity for 200 cycles after over-discharging was tested.

Sample 35 and Sample 36 were deeply discharged to 0.01 V, and then second electrolyte solutions with the same lithium-ion concentration were injected into inner cavities of the samples; after standing for a set time, free electrolyte solutions and gases in the inner cavities of the waste lithium-ion batteries were discharged together with the impurities in the inner cavities of the waste lithium-ion batteries; first electrolyte solutions were injected into the inner cavities of the samples; and after standing for 24 to 72 hours, the charge and discharge capacity for 200 cycles after over-discharging was tested.

Specific steps were the same as those in Embodiment 1, and thus were not described herein again.

Detailed test data was shown in Table 5 and Fig. 3.

**Table 5**

| | Over-disch arging voltage/V | Initial capacity/ Ah | Charge and discharge capacity/ Ah after 200 cycles | Charge and discharge capacity retention rate% after 200 cycles | Repaired capacity/ Ah | Repaired capacity retention rate% | Repaired charge and discharge capacity/ Ah for 200 cycles | Repaired charge and discharge capacity retention rate% for 200 cycles |
|---|---|---|---|---|---|---|---|---|
| Sample 25 | 2.0 | 23.500 | 23.186 | 98.66 | 23.158 | 98.54 | 22.885 | 97.38 |
| Sample 26 | 2.0 | 23.334 | 23.110 | 99.04 | 23.100 | 99.00 | 22.772 | 97.59 |
| Sample 27 | 1.5 | 23.435 | 23.192 | 98.96 | 23.177 | 98.90 | 22.819 | 97.37 |
| Sample 28 | 1.5 | 24.770 | 24.298 | 98.09 | 24.331 | 98.23 | 23.857 | 96.31 |
| Sample 29 | 1.0 | 24.350 | 24.062 | 98.82 | 23.780 | 97.66 | 23.781 | 97.66 |
| Sample 30 | 1.0 | 24.060 | 23.617 | 98.16 | 23.364 | 97.11 | 23.326 | 96.95 |
| Sample 31 | 0.5 | 23.414 | 23.079 | 98.57 | 23.111 | 98.70 | 22.766 | 97.23 |
| Sample 32 | 0.5 | 24.550 | 24.198 | 98.57 | 23.782 | 96.87 | 23.811 | 96.99 |
| Sample 33 | 0.05 | 23.520 | 23.251 | 98.86 | 23.210 | 98.68 | 22.968 | 97.65 |
| Sample 34 | 0.05 | 22.680 | 22.602 | 99.66 | 22.386 | 98.70 | 22.368 | 98.62 |
| Sample 35 | 0.01 | 23.044 | 22.786 | 98.88 | 23.656 | 102.66 | 22.674 | 98.39 |
| Sample 36 | 0.01 | 23.048 | 22.678 | 98.40 | 23.551 | 102.18 | 22.602 | 98.06 |

From Table 5 and Fig. 3, it might be seen that, if the final over-discharging voltage was lower, the repair effect was more significant. Moreover, after over-discharging, the repair effect was the best after the electrolyte solution in the inner cavity of the battery was replaced.

### Embodiment 6

A difference between this embodiment and Embodiment 1 lied in that, this embodiment further included, on the basis of Embodiment 1, a step of forming a lithium-ion battery after electrolyte solution replacement.

In this embodiment, a plurality of new 24 Ah square shell lithium iron phosphate batteries were taken, and were used as Sample 37 to Sample 46 after 200 charge and discharge cycles; Sample 37 to Sample 46 were deeply discharged, and then second electrolyte solutions with the same lithium-ion concentration and same amount were injected into inner cavities of the samples; after standing for 24 to 72 hours, free electrolyte solutions and gases in the inner cavities of the waste lithium-ion batteries were discharged; first electrolyte solutions (SEI film forming additives were added to the first electrolyte solutions) were injected into the inner cavities of the samples, and after standing for 24 to 72 hours, formation was performed, and the capacities of the batteries were tested; and if a set target value was reached, the repair of the capacities of the waste lithium-ion batteries was completed, otherwise, the above operations were repeated until the capacity was recovered to the set target value.

Before formation, processes of step (1) to step (5) in Embodiment 1 might be used, and the samples were formed after step (5).

Detailed formation parameters were as follows.

The sample was charged to a voltage to 3.5 V at a constant current of 0.1 C by using the 5 V and 20 A charge and discharge tester, allowed to stand for 1-24 h, and then discharged to 2.5 V at 0.1 C, so as to complete one formation cycle; and after formation was completed, charge and discharge tests were performed on the samples.
a. The repaired capacity of the battery was directly tested at 0.5-1 C on the charge and discharge tester.
b. At 25 °C±5 °C, a battery was charged to a voltage of 3.65 V at a constant current (0.75 C) and charged to a current of 1/20 C at a constant voltage by using the 5 V-20 A charge and discharge tester, allowed to stand for 30 min, and then discharged to a cut-off voltage of 2.5 V at a constant current, completing one cycle; the capacities after the battery was discharged for 200 cycles and 400 cycles were tested; and in combination with the initial cycle capacity of the battery, charge and discharge capacity retention rates for 200 cycles and 400 cycles were calculated.

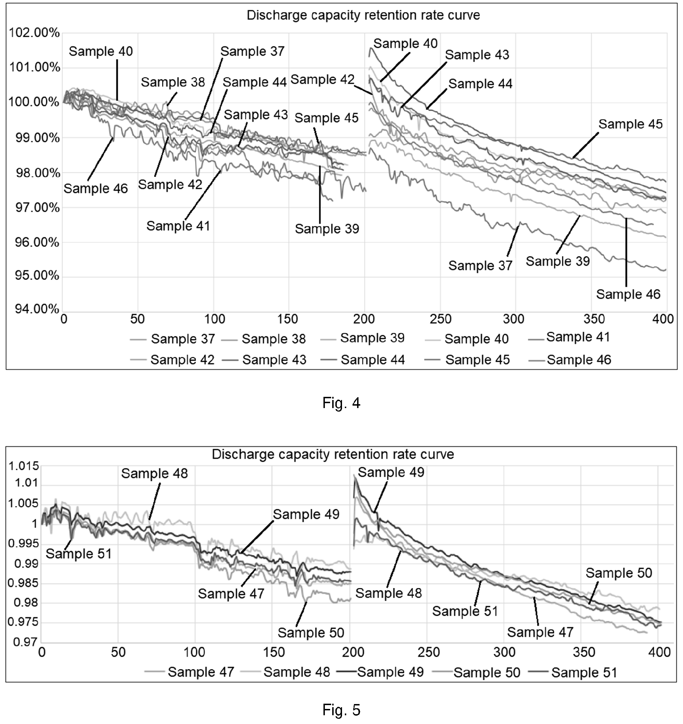

Detailed test data was shown in Table 6 and Fig. 4.

**Table 6**

| | Initial capacity/ Ah | Charge and discharge capacity/ Ah after 200 cycles | Charge and discharge capacity retention rate% after 200 cycles | Repaired capacity/Ah | Repaired capacity retention rate% | Repaired charge and discharge capacity/Ah after 200 cycles | Repaired charge and discharge capacity retention rate% after 200 cycles |
|---|---|---|---|---|---|---|---|
| Sample 37 | 23.638 | 23.277 | 98.47 | 23.586 | 99.78 | 22.983 | 97.23 |
| Sample 38 | 24.840 | 24.466 | 98.49 | 24.605 | 99.05 | 24.163 | 97.27 |
| Sample 39 | 23.128 | 22.646 | 97.92 | 22.867 | 98.87 | 22.231 | 96.12 |
| Sample 40 | 22.439 | 22.037 | 98.21 | 22.645 | 100.92 | 21.823 | 97.26 |
| Sample 41 | 24.212 | 23.528 | 97.18 | 23.870 | 98.59 | 23.054 | 95.22 |
| Sample 42 | 23.389 | 22.956 | 98.15 | 23.470 | 100.35 | 22.649 | 96.84 |
| Sample 43 | 22.736 | 22.295 | 98.06 | 22.870 | 100.59 | 22.104 | 97.22 |
| Sample 44 | 22.919 | 22.510 | 98.22 | 23.252 | 101.46 | 22.325 | 97.41 |
| Sample 45 | 23.436 | 23.102 | 98.58 | 23.577 | 100.60 | 22.900 | 97.72 |
| Sample 46 | 23.724 | 23.121 | 97.46 | 23.704 | 99.92 | 22.895 | 96.51 |

From Table 6 and Fig. 4, it might be seen that, after first repair was completed, the capacity of the lithium-ion single battery in this embodiment was greater than the capacity before repair, considering that the capacity was recovered to the set target value.

After repair, a good capacity retention rate was still remained after 200 charge and discharge cycles.

### Embodiment 7

A difference between this embodiment and Embodiment 6 lied in that, this embodiment further included, on the basis of Embodiment 6, a step of performing electrolyte solution replacement on the formed lithium-ion battery.

In this embodiment, a plurality of new 24 Ah square shell lithium iron phosphate batteries were taken, and were used as Sample 47 to Sample 51 after 200 charge and discharge cycles; Sample 47 to Sample 51 were deeply discharged, and then second electrolyte solutions with the same lithium-ion concentration and same amount were injected into inner cavities of the samples; after standing for 24 to 72 hours, free electrolyte solutions and gases in the inner cavities of the waste lithium-ion batteries were discharged; first electrolyte solutions (SEI film forming additives were added to the first electrolyte solutions) were injected into the inner cavities of the samples, and after standing for 24 to 72 hours, formation was performed; and the free electrolyte solution in the inner cavity of the formed lithium-ion battery was discharged, then a third electrolyte solution was injected into the inner cavity of the lithium-ion battery (the third electrolyte solution was a conventional electrolyte solution), and the battery was allowed to stand for a set time. The capacity of the battery was tested, and the repair of the capacity of the waste lithium-ion battery was completed if a set target value was reached, otherwise, the above operations were repeated until the capacity was recovered to the set target value.

Detailed test data was shown in Table 7 and Fig. 5.

**Table 7**

| | Initial capacity/Ah | Charge and discharge capacity/Ah after 200 cycles | Capacity retention rate (%) after 200 cycles | Repaired capacity/Ah | Repaired capacity retention rate% | Repaired charge and discharg e capacity after 200 cycles | Repaired charge and discharge capacity retention rate after 200 cycles |
|---|---|---|---|---|---|---|---|
| Sample 47 | 23.606 | 23.250 | 98.49 | 23.713 | 100.45 | 22.956 | 97.24 |
| Sample 48 | 24.530 | 24.252 | 98.87 | 24.414 | 99.53 | 24.009 | 97.88 |
| Sample 49 | 23.469 | 23.185 | 98.79 | 23.689 | 100.94 | 22.889 | 97.53 |
| Sample 50 | 23.676 | 23.229 | 98.11 | 23.906 | 100.97 | 23.082 | 97.49 |
| Sample 51 | 23.657 | 23.314 | 98.55 | 23.647 | 99.96 | 23.046 | 97.42 |

From Table 7 and Fig. 5, it might be seen that, after first repair was completed, the capacity of the lithium-ion single battery in this embodiment was greater than the capacity before repair, considering that the capacity was recovered to the set target value.

After repair, a good capacity retention rate was still remained after 200 charge and discharge cycles.

### Embodiment 8

A difference between this embodiment and the above embodiment lied in that, in this embodiment, a waste high-capacity lithium-ion battery was used as a repair object.

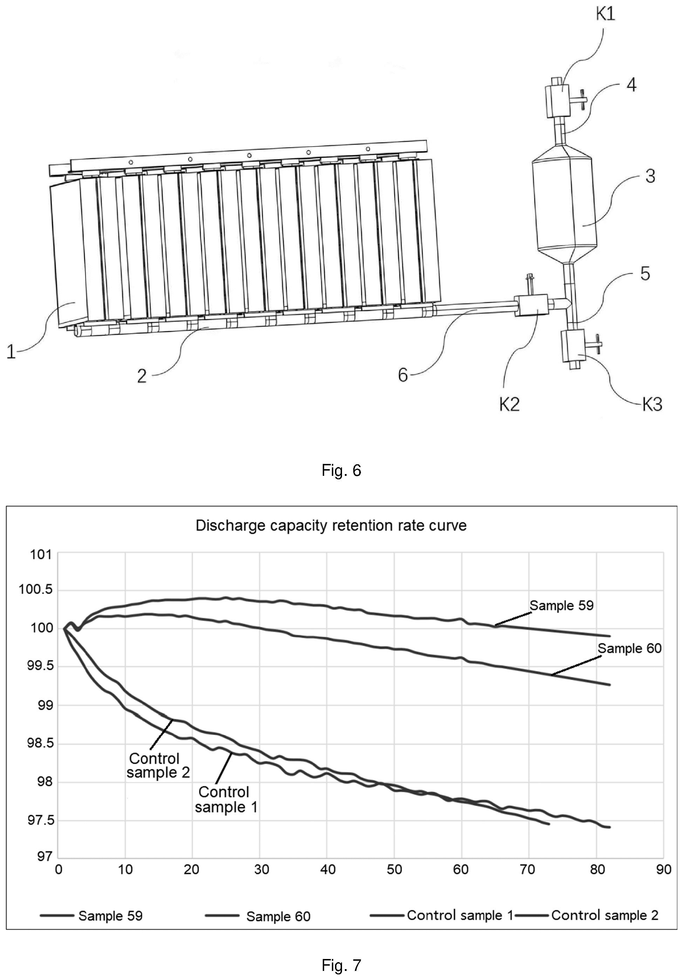

A structure of the waste high-capacity lithium-ion battery in this embodiment was shown in Fig. 6, and included a plurality of waste lithium-ion single batteries connected in parallel and an electrolyte solution sharing chamber. An electrolyte solution region of an inner cavity of each waste lithium-ion single battery communicated with each other via the electrolyte solution sharing chamber.

Repair was realized by connecting a repair apparatus at an electrolyte solution sharing chamber port. The repair apparatus included a buffer tank; through holes were provided in the top and bottom of the buffer tank, and a first pipe section and a second pipe section, which penetrated through the through holes, were connected to the top and bottom of the buffer tank; a valve K1 was disposed on the first pipe section, a valve K3 was disposed on the second pipe section, and a third pipe section was connected to the second pipe section between the K3 and the bottom through hole; and a valve K2 was disposed on the third pipe section.

In some other embodiments, a vacuum pump might be directly connected to the electrolyte solution sharing chamber port for electrolyte solution extraction (electrolyte solution discharging), and an electrolyte solution injection apparatus was connected to the electrolyte solution sharing chamber port for electrolyte solution injection.

It was to be noted that, due to a relatively large amount of the free electrolyte solution in the inner cavity of the high-capacity battery (including the inner cavity of each single battery and the inner cavity of the electrolyte solution sharing chamber), in order to prevent decomposition of an additive contained therein during over-discharging from affecting the repair effect, a difference between this embodiment and Embodiment 1 lied in that, before over-discharging, the free electrolyte solution in the inner cavity of the high-capacity battery was pumped out, and subsequent repair processes were performed after a pure-solvent electrolyte solution was injected.

Furthermore, since the inner cavity of the high-capacity battery had a relatively large amount of the free electrolyte solution after over-discharging and the impurities in the inner cavity could be carried out by directly discharging the free electrolyte solution, the difference between this embodiment and Embodiment 1 also lied in that, the second electrolyte solution did not need to be injected into the inner cavity of the high-capacity battery.

Details might be executed according to the following steps.
(1) Screening: the capacities of a plurality of waste 2700 Ah high-capacity lithium-ion batteries were tested on a charge and discharge tester, and 5 high-capacity lithium-ion batteries with the capacity greater than 60% were screened as Sample 52 to Sample 56 of this embodiment.
   A specific method for testing the capacity included: at 25 °C±5 °C, a battery was charged to a voltage of 3.65 V at a constant current (0.5 C) and charged to a cut-off current of 1/20 C at a constant voltage by using a 5 V-1500 A charge and discharge tester, allowed to stand for 30 min, and then discharged to a voltage of 2.5 V at a constant current, completing one cycle, the cycle was repeated for 4 times, an average value of the tested battery capacity was used as a capacity baseline and calculated based on 100% mass.
(2) Electrolyte solution replacement: in a glove box, one end of the electrolyte solution sharing chamber was connected to the third pipe section of the repair apparatus; the valves K1 and K2 were opened, the valve K3 was closed, the valve K1 was connected to the vacuum pump, and the free electrolyte solution in the inner cavity of the high-capacity battery was pumped into the buffer tank; the valves K1 and K2 were closed, the valve K3 was opened, and the electrolyte solution in the buffer tank was discharged; the valve K3 was closed, the valve K1 was opened, the pure-solvent electrolyte solution was injected into the buffer tank, the valve K1 was closed, and since in this case, the pressure in the inner cavity of the high-capacity battery was lower than the pressure in the buffer tank, the valve K2 was opened, and the electrolyte solution in the buffer tank automatically flowed into the inner cavity of the high-capacity battery; the valves K1, K2, and K3 were closed; and the pure-solvent electrolyte solution was selected from one or more of EC, PC, DMC, DEC, EMC, EP, and PP.
(3) Over-discharging: Sample 52 to Sample 56 were deeply over-discharged on the charge and discharge tester to a voltage to equal to 0.01 V; and this embodiment used a constant-resistance over-discharge method, resistance was determined according to the internal resistance of the battery cell, and if the internal resistance was smaller, a constant-resistance value was smaller, and vice versa.
(4) Electrolyte solution discharging: the valve K2 and the valve K3 were opened, the vacuum pump was connected at the valve K3 for vacuuming, and the free electrolyte solutions in the inner cavity of the electrolyte solution sharing chamber and the inner cavity of each single battery were pumped out; and the valves K2 and K3 were closed.
(5) Electrolyte solution injection: the first electrolyte solution was injected into the buffer tank, the valve K1 was closed after an inert protective gas was introduced, the valve K2 was opened to inject the first electrolyte solution in the buffer tank into the electrolyte solution sharing chamber and the inner cavity of each single battery, and the valve K2 was closed.

The first electrolyte solution included one or more of EC, PC, DMC, DEC, EMC, EP, and PP, as well as at least one of the following substances with the content not greater than 2%:
propylene sulfate, trimethyl borate, ortho-acid benzoic imine, 1-(trifluoroacetyl)imidazole, lithium dodecyl sulfate, 2,4-dimethyl-pyrrolidine-3,5-diethyl dicarboxylate, PA6, PA12, PMMA, PVC, cyclohexylboronic acid pinacol ester, 3-sulfolene, VC, 1,3-propanesultone, and a soluble lithium salt such as lithium hexafluorophosphate.

(6) Charge and discharge test: the capacity of the repaired high-capacity lithium-ion battery was directly tested at 0.5 C on the charge and discharge tester.

Detailed test data was shown in Table 8.

**Table 8**

| | Nominal capacity/A h | Initial capacity/Ah | Initial capacity retention rate% | Repaired capacity/Ah | Repaired capacity retention rate% |
|---|---|---|---|---|---|
| Sample 52 | 2700 | 2402 | 88.96 | 2538 | 94.00 |
| Sample 53 | 2700 | 2398 | 88.81 | 2565 | 95.00 |
| Sample 54 | 2700 | 2389 | 88.48 | 2496 | 92.44 |
| Sample 55 | 2700 | 2452 | 90.81 | 2584 | 95.70 |
| Sample 56 | 2700 | 2428 | 89.93 | 2566 | 95.04 |

From Table 8, it might be seen that, after first repair was completed, the capacity of the high-capacity lithium-ion battery in this embodiment was greater than the initial capacity, considering that the capacity was recovered to the set target value.

### Embodiment 9

This embodiment was used as a comparative example, and used 2 high-capacity lithium-ion batteries as repair objects. A difference between this embodiment and Embodiment 8 lied in that, the processes of step (2) and step (3) above were not executed in this embodiment, and repair was performed by only using the manners in step (4) and step (5). Detailed test data was shown in Table 9.

**Table 9**

| | Nominal capacity/Ah | Initial capacity/Ah | Initial capacity retention rate% | Repaired capacity/Ah | Repaired capacity retention rate% |
|---|---|---|---|---|---|
| Sample 57 | 2700 | 2425 | 89.81 | 2424 | 89.78 |
| Sample 58 | 2700 | 2487 | 92.11 | 2488 | 92.15 |

From Table 9, it might be seen that, the high-capacity lithium-ion battery was repaired by only using the manners in step (4) and step (5), and the repair effect was not significant.

### Embodiment 10

A difference between this embodiment and Embodiment 8 lied in that, this embodiment further included, on the basis of Embodiment 8, a step of forming the high-capacity lithium-ion battery treated in step (5).

A plurality of waste 2700 Ah high-capacity lithium-ion batteries were taken, the initial capacity of the battery was tested, and a plurality of samples of this embodiment were screened; the plurality of samples were deeply discharged, and then free electrolyte solutions and gases in the inner cavities of the waste lithium-ion batteries were discharged; first electrolyte solutions (SEI film forming additives were added to the first electrolyte solutions) were injected into the inner cavities of the samples, and after standing for 24 to 72 hours, formation was performed, and the capacities of the batteries were tested; and if a set target value was reached, the repair of the capacities of the waste lithium-ion batteries was completed, otherwise, the above operations were repeated until the capacity was recovered to the set target value.

Detailed formation parameters were as follows.

The sample was charged to a voltage to 3.5 V at a constant current of 0.1 C by using the 5 V and 1500 A charge and discharge tester, allowed to stand for 1-24 h, and then discharged to 2.5 V at 0.1 C, so as to complete one formation cycle; after formation was completed, charge and discharge tests were performed on the samples, and then the completion of one-time repair was displayed, the capacity of the high-capacity lithium-ion battery in this embodiment was greater than the capacity before repair, considering that the capacity was recovered to the set target value. After repair, a good capacity retention rate was still remained after 200 charge and discharge cycles.

### Embodiment 11

A difference between this embodiment and Embodiment 10 lied in that, this embodiment further included, on the basis of Embodiment 10, a step of performing electrolyte solution replacement on the formed high-capacity lithium-ion battery.

A plurality of waste 2700 Ah high-capacity lithium-ion batteries were taken, the initial capacity of the battery was tested, and a plurality of samples were screened as samples of this embodiment; the plurality of samples were deeply discharged, and then free electrolyte solutions and gases in the inner cavities of the waste lithium-ion batteries were discharged; first electrolyte solutions (SEI film forming additives were added to the first electrolyte solutions) were injected into the inner cavities of the samples, and after standing for 24 to 72 hours, formation was performed; and the free electrolyte solution in the inner cavity of the formed lithium-ion battery was discharged, then a third electrolyte solution was injected into the inner cavity of the lithium-ion battery (the third electrolyte solution was a conventional electrolyte solution), and the battery was allowed to stand for a set time. The capacity of the battery was tested, and the repair of the capacity of the waste lithium-ion battery was completed if a set target value was reached, otherwise, the above operations were repeated until the capacity was recovered to the set target value.

Through testing, it indicated that after first repair was completed, the capacity of the lithium-ion single battery in this embodiment was greater than the capacity before repair, considering that the capacity was recovered to the set target value. After repair, a good capacity retention rate was still remained after 200 charge and discharge cycles.

### Embodiment 12

A difference between this embodiment and the above embodiment lied in that, this embodiment used the manner of first performing over-discharging and then performed electrolyte solution replacement and formation to repair a waste lithium-ion single battery.

Details might be executed according to the following steps.
(1) Screening: the initial capacities of the plurality of waste 30 Ah square shell lithium iron phosphate batteries produced by the same manufacturer and at the same batch were tested on a charge and discharge tester, and 4 lithium-ion batteries with the capacity greater than 80% were screened, where two were used as Sample 59 to Sample 60 of this embodiment, and the other two were used as Control sample 1 and Control sample 2.

A specific method for testing the capacity included: at 25 °C±5 °C, a battery was charged to a voltage of 3.65 V at a constant current (0.75 C) and charged to a cut-off current of 1/20 C at a constant voltage by using a 5 V-20 A charge and discharge tester, allowed to stand for 30 min, and then discharged to a voltage of 2.5 V at a constant current, completing one cycle, the cycle was repeated for 4 times, an average value of the tested battery capacity was used as a capacity baseline and calculated based on 100% mass.

(2) Over-discharging: Sample 59 to Sample 60 were deeply over-discharged to a voltage to equal to 0.1-0.01 V (a preferred cut-off voltage in this embodiment was 0.1 V) on the charge and discharge tester, and this embodiment used a constant-resistance over-discharge method to chemically decompose an SEI film at this voltage and produced a gas.

(3) Electrolyte solution injection: in a glove box, a battery electrolyte solution injection port was opened to discharge the gas, 20 mL of the first electrolyte solution was injected by using a syringe, and the battery was sealed after electrolyte solution injection and allowed to stand for 8 h.

(4) Formation: at normal temperature, a small-current formation method was used to form the battery treated in step (3).

(5) Charge and discharge test.

(5.1) The repaired capacity of the battery was directly tested on the charge and discharge tester.

(5.2) At 25 °C±5 °C, a battery was charged to a voltage of 3.65 V at a constant current (0.75 C) and charged to a current of 1/20 C at a constant voltage by using the 5 V-20 A charge and discharge tester, allowed to stand for 30 min, and then discharged to a cut-off voltage of 2.5 V at a constant current, completing one cycle; the capacities after the battery was discharged for 80 cycles were tested; and in combination with the initial cycle capacity of the battery, charge and discharge capacity retention rates for 80 cycles were calculated.

Detailed test data was shown in Fig. 7.

From Fig. 7, it might be seen that, one-time repair was completed, and after 80 charge and discharge cycles, the capacities of Sample 59 and Sample 60 were higher than that of Control sample 1 and Control sample 2, indicating that this embodiment had a good repair effect.

The high-capacity lithium-ion battery might also be repaired by using the repair method of this embodiment.

## Claims

1. A method for repairing the capacity of a waste lithium-ion battery, wherein the method comprises the following steps:
S1, deeply over-discharging a waste lithium-ion battery;
S2, discharging a free electrolyte solution and a gas in an inner cavity of the waste lithium-ion battery together with impurities in the inner cavity of the waste lithium-ion battery if the inner cavity of the waste lithium-ion battery treated in S1 has the free electrolyte solution, otherwise, injecting a second electrolyte solution into the inner cavity of the waste lithium-ion battery treated in S1, allowing the battery to stand for a set time, and then discharging the free electrolyte solution and the gas in the inner cavity of the waste lithium-ion battery together with the impurities in the inner cavity of the waste lithium-ion battery;
S3, injecting a first electrolyte solution into the inner cavity of the waste lithium-ion battery treated in S2, and allowing the battery to stand for a set time; and
S4, testing the capacity of the battery, and completing the repair of the capacity of the waste lithium-ion battery if a set target value is reached, otherwise, returning to S1.

2. The method for repairing the capacity of a waste lithium-ion battery according to claim 1, wherein in S2, before discharging the free electrolyte solution and the gas in the inner cavity of the waste lithium-ion battery, the method further comprises a step of shaking the waste lithium-ion battery.

3. The method for repairing the capacity of a waste lithium-ion battery according to claim 2, wherein a concentration of lithium ions in the second electrolyte solution is 1.2 mol/L.

4. The method for repairing the capacity of a waste lithium-ion battery according to claim 1, wherein in S1, a constant-resistance discharge method is used to deeply over-discharge the waste lithium-ion battery to a voltage to be 0.01 V.

5. The method for repairing the capacity of a waste lithium-ion battery according to claim 1, wherein the first electrolyte solution is an electrolyte solution that is obtained by purifying, using a purification material, the free electrolyte solution discharged in S2.

6. The method for repairing the capacity of a waste lithium-ion battery according to claim 5, wherein the purification material is at least one of an active molecular sieve, an activated carbon adsorbent, a silica gel adsorbent, an alumina adsorbent, a copper catalyst adsorbent, or polyimide.

7. The method for repairing the capacity of a waste lithium-ion battery according to any one of claims 1 to 6, wherein before S1, the method further comprises determining whether the inner cavity of the waste lithium-ion battery has the free electrolyte solution, and if so, performing a step of discharging the free electrolyte solution and injecting a fourth electrolyte solution, wherein the fourth electrolyte solution is a pure-solvent electrolyte solution.

8. The method for repairing the capacity of a waste lithium-ion battery according to any one of claims 1 to 6, wherein a step of forming the lithium-ion battery treated in S3 is also comprised between S3 and S4.

9. The method for repairing the capacity of a waste lithium-ion battery according to claim 8, wherein the first electrolyte solution comprises an SEI film forming additive.

10. The method for repairing the capacity of a waste lithium-ion battery according to claim 8, wherein after forming the lithium-ion battery treated in S3 and before executing S4, the method further comprises the following step:
discharging the free electrolyte solution in the inner cavity of the formed lithium-ion battery, then injecting a third electrolyte solution into the inner cavity of the lithium-ion battery, and allowing the battery to stand for a set time.

11. A method for repairing the capacity of a waste lithium-ion battery, wherein the method comprises the following steps:
S1, deeply over-discharging a waste lithium-ion battery;
S2, discharging a gas in an inner cavity of the waste lithium-ion battery;
S3, injecting a first electrolyte solution into the inner cavity of the waste lithium-ion battery treated in S2, and allowing the battery to stand for a set time, wherein the first electrolyte solution has an SEI film repairing additive;
S4, forming the lithium-ion battery treated in S3; and
S5, testing the capacity of the battery, and completing the repair of the capacity of the waste lithium-ion battery if a set target value is reached, otherwise, returning to S1.

12. The method for repairing the capacity of a waste lithium-ion battery according to claim 11, wherein in S1, a constant-current or constant-resistance discharge method is used to deeply over-discharge the waste lithium-ion battery to a voltage to be 0.01 V.
